Europäisches Patentamt

European Patent Office

Office européen des brevets

(19)

(11) Veröffentlichungsnummer: **0 083 414**
**B1**

(12) **EUROPÄISCHE PATENTSCHRIFT**

(45) Veröffentlichungstag der Patentschrift:
06.02.85

(51) Int. Cl.⁴: **A 22 C 11/12**

(21) Anmeldenummer: **82110980.8**

(22) Anmeldetag: **27.11.82**

(54) **Wickel zum Magazinieren und Zuführen von Wurstaufhängeschlaufen.**

(30) Priorität: **30.11.81 DE 3147386**

(43) Veröffentlichungstag der Anmeldung:
**13.07.83 Patentblatt 83/28**

(45) Bekanntmachung des Hinweises auf die Patenterteilung:
**06.02.85 Patentblatt 85/6**

(84) Benannte Vertragsstaaten:
**AT BE CH FR IT LI NL SE**

(56) Entgegenhaltungen:
**DE - B - 2 529 821**
**DE - B - 2 724 393**
**DE - C - 2 352 000**

(73) Patentinhaber: **Bertram Hans J., Strassheimer Weg 26,
D-6365 Rossbach v.d.H. (DE)**

(72) Erfinder: **Bertram Hans J., Strassheimer Weg 26,
D-6365 Rossbach v.d.H. (DE)**

(74) Vertreter: **Beyer, Werner, Dipl.-Ing. et al,
Staufenstrasse 36, II P.O. Box 174109,
D-6000 Frankfurt/Main (DE)**

## Beschreibung

Die Erfindung betrifft einen Wickel zum Magazinieren und Zuführen von Wurstaufhängeschlaufen, bestehend aus einem aufrollbaren Band, auf welchem die aus Garn geknoteten Schlaufen in geöffnetem Zustand mit dem Knoten an einem Schlaufenende gleichgerichtet aufgereiht sind, wobei die den Knotenenden gegenüberliegenden Henkelenden der Schlaufen gegenüber dem Band unbefestigt sind.

Bei einem bekannten Wickel dieser Art (DE-C Nr. 2352000) sind die Wurstaufhängeschlaufen im Abstand nebeneinander an einem das Band bildenden Gurt an ihren ebenfalls Abstand zueinander aufweisenden, etwa parallelen Seiten befestigt, so dass zu beiden Seiten des Gurtes offene Teilschlaufen überstehen, wobei vorzugsweise die Schlaufen auf dem Gurt mittels zweier miteinander verklebter Streifen aus Papier, Kunststoff oder Textilmaterial befestigt sind, d.h. diese beiden Streifen, zwischen denen die Schlaufen befestigt sind, den Gurt bilden. Bei der Vereinzelung der Schlaufen an der Verarbeitungsstelle beim Anklippen an die Würste bleiben deshalb abgeschnittene oder abgerissene Teile des Gurtes an den Schlaufen zurück, was nicht nur das äussere Bild beeinträchtigt, sondern auch das Aufhängen der Würste behindert. Ausserdem bedarf es einer sehr sorgfältigen Aufspulung des Gurtes in genau übereinanderliegenden Lagen, wodurch der Wickel sehr schnell auf einen grossen Durchmesser anwächst mit der Folge, dass die aufspulbare Gurtlänge begrenzt ist und der Wickel bei der Verarbeitung entsprechend schnell verbraucht ist.

Aufgabe der Erfindung ist es, diesem Mangel abzuhelfen und einen Wickel zum Magazinieren und Zuführen von Wurstaufhängeschlaufen zu schaffen, der erheblich grössere Mengen von Schlaufen fasst und aus dem sich die Schlaufen ohne besondere Massnahmen vollständig vom Band lösen lassen.

Erfindungsgemäss wird diese Aufgabe dadurch gelöst, dass die Aufhängeschlaufen an dem Band in dessen Längsrichtung einander schuppenartig überlappend lösbar angeheftet sind.

Der erfindungsgemässe Wickel vermeidet somit über die Seitenkanten des Bandes überstehende Teile und erlaubt dennoch durch die schuppenartige Überlappung der Schlaufen, dass die den Knotenenden gegenüberliegenden Schenkelenden der Schlaufen frei den Werkzeugen zur Verklippung der Wurstenden unter Einschluss der Schlaufen dargeboten werden können.

Dabei ist das Band vorzugsweise ein einseitig selbstklebend beschichtetes Klebeband.

Um die erwähnte Darbietung der Henkelenden gegenüber den Klippwerkzeugen zu gewährleisten, gibt es zwei Möglichkeiten: In einer ersten Ausgestaltung der Erfindung weist das Band abwechselnd klebende und nichtklebende Abschnitte auf, und die Aufhängeschlaufen überlappen einander mit den Henkelenden zuunterst, wobei die Henkelenden auf dem nichtklebenden Abschnitt des Bandes angeordnet sind. Dadurch stehen die Henkelenden der Schlaufen beim Abziehen des Gurtes über eine scharfe Kante oder dünne Stange aufgrund ihrer Eigensteifigkeit von selbst so weit vor, dass sie ohne Behinderung durch den Gurt von den Verklippungswerkzeugen erfasst werden können.

Gemäss einer anderen Ausgestaltung der Erfindung zur Gewährleistung einer einwandfreien Darbietung der Henkelenden der Schlaufen ist das Band durchgehend klebend und die Aufhängeschlaufen liegen mit den Henkelenden über den Seiten der jeweils vorhergehenden Schlaufen, wobei ihre Seiten ausserhalb der Seiten der jeweils vorhergehenden Schlaufen zu den Knotenenden hin verlaufen. Es hat sich gezeigt, dass auch hierbei die Henkelenden mühelos von den Verklippungswerkzeugen erfasst werden können, da sie beim Abziehen der jeweils vorhergehenden Schlaufen durch deren darunter hinweggezogene Knotenenden von der Klebeschicht gelöst werden.

Die Dichte der Überlappung kann an sich beliebig gewählt werden. Es hat sich jedoch als zweckmässig erwiesen, wenn sich jeweils mehrere Schlaufen, beispielsweise fünf Schlaufen, überlappen. Dadurch wird das Klebeband besser genützt und dennoch die gewünschte Einzelablösung der Schlaufen bei der Verarbeitung gewährleistet.

Noch ein weiteres Merkmal zur vorteilhaften Ausgestaltung der Erfindung sieht vor, dass das Band mit den Schlaufen nach Art einer Kreuzspule gewickelt ist. Dadurch lassen sich grosse Längen an Band und entsprechend viele Wurstaufhängeschlaufen auf einem einzigen Wickel unterbringen, und der Anteil der Totzeiten, die für das Ansetzen eines neuen Wickels benötigt werden, ist entsprechend gering.

Um das einwandfreie Zuführen der Schlaufen im Takt der Verklippung zu gewährleisten, kann auch hier das Band in bekannter Weise mit Löchern oder Randaussparungen in regelmässigen Längenabständen zum Eingriff eines Transportelements versehen sein.

Die Erfindung wird nachstehend anhand der Zeichnung näher erläutert. Es zeigen:

Fig. 1 in perspektivischer Darstellung einen Wickel nach der Erfindung mit über eine Stange etwa rechtwinkelig abgezogenem Band,

Fig. 2 eine Draufsicht auf einen Bandabschnitt mit einer ersten Ausführungsform der Erfindung, und

Fig. 3 eine entsprechende Draufsicht mit einer zweiten Ausführungsform der Erfindung.

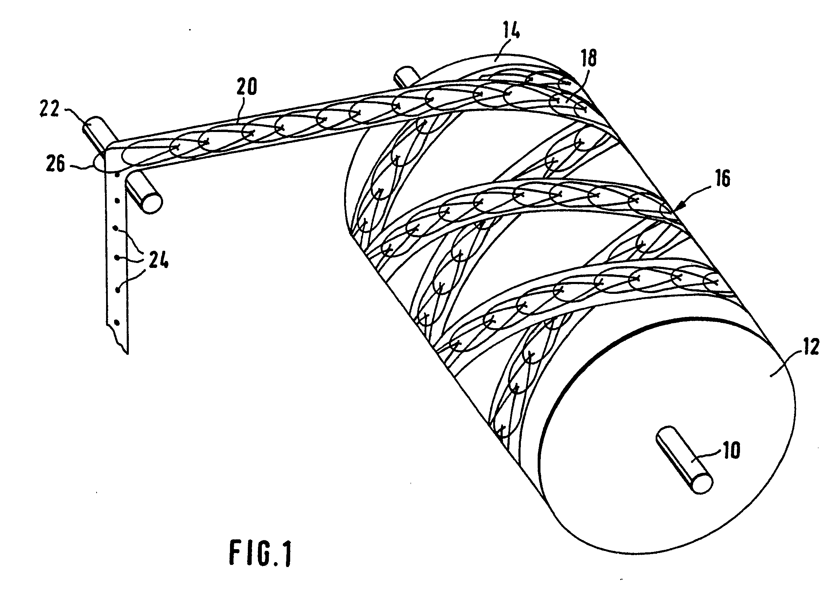

Gemäss Fig. 1 trägt ein von einer Welle 10 und Endscheiben 12, 14 gebildeter Spulenkörper einen Kreuzwickel 16 aus einem Band 18, auf welchem einander schuppenartig überlappend aus Garn geknotete Wurstaufhängeschlaufen 20 aufgeklebt sind. Das Band wird bei der Verarbeitung über eine dünne Welle oder Stange 22 mittels eines (nicht gezeigten) Transportelements, das in regelmässigen Abständen angeordnete Löcher 24 in der Bandmitte eingreift, von der Spule 10, 12, 14 abgezogen, wodurch in weiter unten erläuterter Weise die in Abzugsrichtung vorn befindlichen Henkelenden 26 der Wurstaufhängeschlaufen 20 an der Abknickstelle vorstehen und einem (nicht gezeigten) Klippwerkzeug zum Einklippen in die Verschlussklammern an den Wurstenden dargeboten werden.

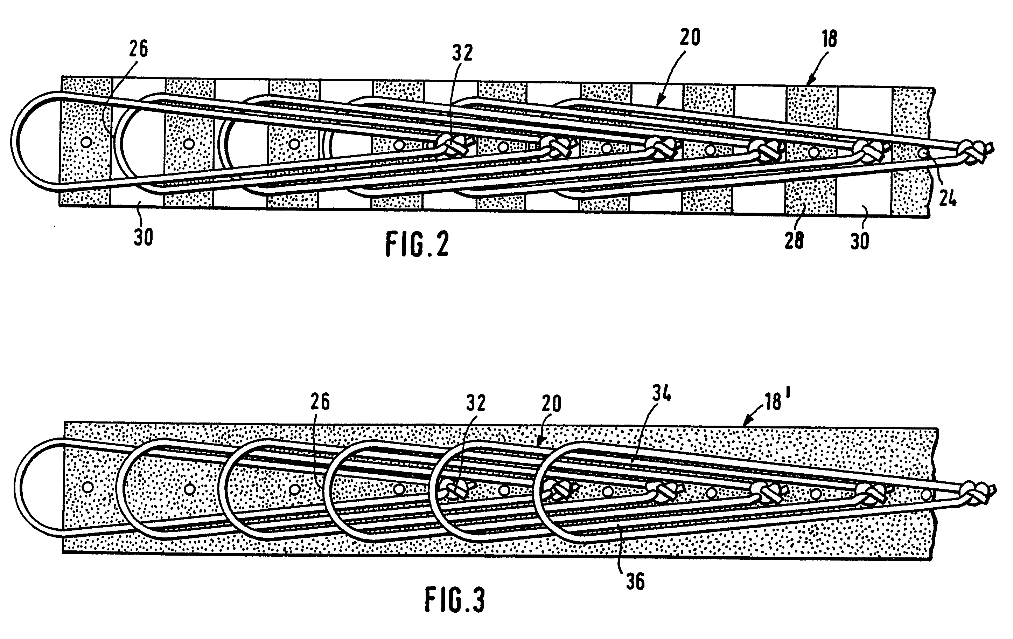

Gemäss der Ausführung der Erfindung nach Fig. 2 ist das Band 18 ein Klebeband mit abwechselnd klebenden Abschnitten 28 und dazwischen angeordneten nichtklebenden Abschnitten 30, deren Teilung den Aufhängeschlaufen 20 entspricht. Die Teilung kann dieselbe sein wie die der Löcher 24. Die Wurstaufhängeschlaufen 20 sind hierbei derart überlappend auf das Klebeband aufgeklebt, dass die Knotenenden 32 zuoberst liegen und die Henkelenden 26 in den nichtklebenden Abschnitten 30 angeordnet sind. Dadurch wird sichergestellt, dass beim Abziehen des Bandes über die Stange oder Welle 22 (Fig. 1) die Henkelenden 26 aufgrund der Eigensteifigkeit des Schlaufengarns an der Abknickstelle vorstehen und dort vom Klippwerkzeug erfasst werden können.

Bei der Ausführungsform nach Fig. 3 ist das Band 18' ein durchgehend klebendes Klebeband, und die Wurstaufhängeschlaufen 20 sind darauf derart schuppenartig überlappend aufgeklebt, dass die Henkelenden 26 über den Seiten 34, 36 der jeweils vorhergehenden Schlaufe zu liegen kommen. Obgleich bei dieser Ausbildung auch die Henkelenden 26 von der Klebeschicht des Bandes erfasst werden, wird diese Verklebung durch das Herausziehen der jeweils vorhergehenden Schlaufe bei der Verarbeitung gelöst, so dass auch hier, wie in Fig. 1 dargestellt, die Henkelenden 26 frei in den Angriffsbereich des Klippwerkzeugs vorzustehen vermögen.

### Patentansprüche

1. Wickel (10, 12, 14) zum Magazinieren und Zuführen von Wurstaufhängeschlaufen (20), bestehend aus einem aufrollbaren Band (18), auf welchem die aus Garn geknoteten Schlaufen (20) in geöffnetem Zustand mit dem Knoten an einem Schlaufenende (32) gleichgerichtet aufgereiht sind, wobei die den Knotenenden (32) gegenüberliegenden Henkelenden (26) der Schlaufen gegenüber dem Band unbefestigt sind, dadurch gekennzeichnet, dass die Aufhängeschlaufen (20) an dem Band (18) in dessen Längsrichtung einander schuppenartig überlappend lösbar angeheftet sind.

2. Wickel nach Anspruch 1, dadurch gekennzeichnet, dass der Gurt (18) ein einseitig selbstklebend beschichtetes Klebeband ist.

3. Wickel nach Anspruch 2, dadurch gekennzeichnet, dass das Band (18) abwechselnd klebende und nichtklebende Abschnitte (28 bzw. 30) aufweist und die Aufhängeschlaufen (20) einander mit den Henkelenden (26) zuunterst überlappen, wobei die Henkelenden (26) auf dem klebfreien Abschnitt (30) des Bandes (18) angeordnet sind.

4. Wickel nach Anspruch 2, dadurch gekennzeichnet, dass das Band (18') durchgehend klebend ist und die Aufhängeschlaufen (20) mit den Henkelenden (26) über den Seiten (34, 36) der jeweils vorhergehenden Schlaufen liegen und ihre Seiten ausserhalb der Seiten (34, 36) der jeweils vorhergehenden Schlaufen zu den Knotenenden (32) hin verlaufen.

5. Wickel nach einem der vorhergehenden Ansprüche, dadurch gekennzeichnet, dass sich jeweils mehrere Schlaufen (20) überlappen.

6. Wickel nach einem der vorhergehenden Ansprüche, dadurch gekennzeichnet, dass der Gurt (18) mit den Schlaufen (20) nach Art einer Kreuzspule gewickelt ist.

### Claims

1. A roll (10, 12, 14) for keeping and feeding sausage-hanging loops (20), comprising a tape (18) which can be rolled up and on which the loops (20) of knotted yarn are arranged in the same direction in series in open condition with the knots at one loop end (32), the hook ends (26) of the loops opposite the knot ends (32) being unsecured relative to the tape, characterised in that the hanging loops (20) are detachably fixed to the tape (18) in imbricated fashion in the longitudinal direction thereof.

2. A roll according to Claim 1, characterised in that the strap (18) is an adhesive tape with a self-adhesive coating on one side.

3. A roll according to Claim 2, characterised in that the tape (18) has alternately adhesive and non-adhesive portions (28 and 30 respectively) and the hanging loops (20) overlap one another with the hook ends (26) lowermost, the hook ends (26) being disposed on the adhesive-free portion (30) of the tape (18).

4. A roll according to Claim 2, characterised in that the tape (18') is continuously adhesive and the hanging loops (20) lie with the hook ends (26) over the sides (34, 36) of the respectively preceding loops and their sides outside the sides (34, 36) of the respectively preceding loops extend towards the knot ends (32).

5. A roll according to one of the preceding claims, characterised in that in each case a plurality of loops (20) overlap one another.

6. A roll according to one of the preceding claims, characterised in that the strap is wound with the loops (20) in the manner of a cross reel.

### Revendications

1. Enroulement (10, 12, 14) d'emmagasinage et d'alimentation de rubans d'attache (20) pour saucisses, composé d'une bande enroulable (18), sur laquelle des boucles nouées à partir de fil sont alignées à l'état ouvert avec tous les nœuds orientés dans le même sens à une extrémité (32) de la boucle, de telle sorte que les extrémités (26) opposées aux nœuds (32) soient libres, cet enroulement étant caractérisé par le fait que les boucles d'attache (20) sont fixées à la manière d'écailles à recouvrement et de façon amovible sur la bande (18) et dans le sens longitudinal de celle-ci.

2. Enroulement selon la revendication 1, caractérisé par le fait que la bande (18) est constituée par une bande adhésive dont une seule face est autocollante.

3. Enroulement selon la revendication 2, caractérisé par le fait que la bande (18) comporte des tronçons alternativement adhésifs et non adhésifs (28 ou 30) et que les boucles d'attache (20) se recouvrent entre elles en plaçant les extrémités côté boucle (26) au-dessous, de telle sorte que ces extrémités (26) portent contre le tronçon non adhésif (30) de la bande (18).

4. Enroulement selon la revendication 2, caractérisé par le fait que la bande (18') est adhésive sur toute sa surface, que les boucles d'attache (20) prennent appui sur les bras latéraux (34, 36) de chaque boucle précédente et que leurs côtés s'étendent à l'extérieur des bras (34, 36) de la boucle précédente vers les extrémités nouées (32).

5. Enroulement selon l'une des revendications précédentes, caractérisé par le fait que chaque boucle (20) en recouvre plusieurs.

6. Enroulement selon l'une des revendications précédentes, caractérisé par le fait que la bande (18) munie des boucles (20) est enroulée par spires croisées sur une bobine (12).

FIG.1

FIG.2

FIG.3

0 083 414